## Europäisches Patentamt

## European Patent Office

## Office européen des brevets

(11) Veröffentlichungsnummer: **0 123 051**
A2

# (12) EUROPÄISCHE PATENTANMELDUNG

(21) Anmeldenummer: **84101883.1**

(22) Anmeldetag: **23.02.84**

(51) Int. Cl.³: **F 16 H 5/12**
**F 15 B 13/14**

(30) Priorität: **17.03.83 EP 83102625**

(43) Veröffentlichungstag der Anmeldung:
**31.10.84 Patentblatt 84/44**

(84) Benannte Vertragsstaaten:
**DE FR GB IT NL SE**

(71) Anmelder: **FAG KUGELFISCHER GEORG SCHÄFER**
**Kommanditgesellschaft auf Aktien**
**Georg-Schäfer-Strasse 30**
**D-8720 Schweinfurt(DE)**

(72) Erfinder: **Rüdiger, Eckhart**
**Alter Hohlweg 11**
**D-8603 Ebern(DE)**

(72) Erfinder: **Hager, Günter**
**Gräfenholz**
**D-8601 Rentweinsdorf(DE)**

(74) Vertreter: **Rehmann, Klaus H.**
**Postfach 1260 (FAG) Hauptbahnhofstrasse**
**D-8720 Schweinfurt(DE)**

(54) **Mechanische Betätigungseinrichtung und dazu verwendete Verstärkereinrichtung.**

(57) Um bei einer mechanischen Betätigungseinrichtung, vorzugsweise zum Gangschalten von LKW-Synchrongetrieben eine trotz Verstärkung feinfühlige, direkte, zeitlich beeinflußbare und bei Ausfall der Hilfsenergie trotzdem noch funktionierende Betätigung zu ermöglichen, ist ein hilfsenergieunterstützte Verstärkereinrichtung (1) axial wirkend zwischen dem Betätigungsgestänge (2, 2') angeordnet. Die Verstärkereinrichtung (1) wirkt dabei sowohl in Zug- als auch in Druckrichtung und übt auf das eingangsseitige Betätigungsgestänge (2) eine der Schaltkraft proportionale Reaktionskraft aus.

Fig.1

0123051

FAG Kugelfischer Georg Schäfer KGaA
8720 Schweinfurt

R-RS-739
15. Februar 1984

<u>Mechanische Betätigungseinrichtung und dazu verwendete Verstärkereinrichtung</u>

Die Erfindung betrifft eine mechanische Betätigungseinrichtung, vorzugsweise zum Gangschalten von LKW-Synchrongetrieben, sowie eine dazu verwendete Verstärkereinrichtung.

Bei mechanischen Betätigungseinrichtungen wird üblicherweise die Betätigungskraft über ein Betätigungsgestänge übertragen, wobei durch Hebelübersetzungen eine Kraftverstärkung erzielt wird. Dabei erfolgt eine Änderung des Betätigungsweges, d.h. eine Verstärkung der Kraft hat eine Verlängerung des Weges zur Folge. Bei großen auftretenden Kräften ist es nun nicht immer möglich, die Hebelverhältnisse so zu wählen, daß bei ausreichend niedriger Betätigungskraft der Betätigungsweg sich noch in zumutbaren Grenzen hält. So bedarf es z.B. bei Gangschaltungen von LKW-Getrieben am Schalthebel erheblicher Kraftanstrengungen, um die zur Synchronisierung erforderlichen Anpreßkräfte zu erzeugen. Aus der DE-OS 19 61 597 und GB 869 264 sind bereits Schalteinrichtungen für Zahnräderwechselgetriebe bekannt, die jedoch die Nachteile aufweisen, daß sie als reine Fremdkraftverstärker ausgebildet sind, daher dem Bediener keine Rückmeldung der Verstärkung vermitteln und ein wirklichkeitsgetreues Dosieren mit geringster Eigenbewegung des Schaltstockes nach Überwindung der Synchronkräfte nicht ermöglichen, damit einen Vorlauf zur Betätigungsbewegung des Fahrers bewirken und zu einer unerwünschten Schlagwirkung am Schaltstock führen. Zudem stehen die Anzahl der bewegten Dichtungen und der zu überdrückenden Ventilfedern dem Erreichen einer geringen Ansteuer- und Ventilschließkraft entgegen, was ein weiteres Kriterium für Verstärker dieser Art ist.
Es ist deshalb Aufgabe der Erfindung, eine Betätigungseinrichtung und eine dazu verwendete Verstärkereinrichtung aufzuzeigen, die die vorgenannten Nachteile vermeidet, also insbesondere die sich aus der mechanischen Hebelübersetzung ergebende Kraft-Weg-Abhängigkeit ausschaltet und eine trotz Verstärkung feinfühlige, direkte, zeitlich beeinflußbare und bei Ausfall der Hilfsenergie trotzdem noch funktionierende Betätigung ermöglicht. Die Verstärkereinrichtung soll dabei sowohl in Zug- als auch in Druckrichtung wirken und eine der Verstärkungskraft proportionale Reaktionskraft auf das Betätigungsgestänge ausüben.

Die Lösung dieser Aufgabe ist aus dem kennzeichnenden Teil des Anspruchs 1 zu entnehmen. Vorteilhafte Ausgestaltungen der Erfindung sind in den Ansprüchen 2-8 enthalten.

Die Erfindung soll anhand einiger Ausführungsbeispiele näher erläutert werden.

Es zeigt:

Fig.1 eine schematische Darstellung einer mechanischen Betätigungseinrichtung zum Gangschalten von LKW-Getrieben, wobei die Verstärkereinrichtung am Fahrzeugbau beweglich aufgehängt ist.

Fig.2 eine weitere schematische Darstellung einer mechanischen Betätigungseinrichtung zum Gangschalten von LKW-Getrieben, wobei die Verstärkereinrichtung am Fahrzeugbau fest ist und die Auslenkbewegungen zum Gangschalten mittels Kardangelenke erfolgen.

Fig.3 eine Verstärkereinrichtung im Schnitt.

Fig.4 einen Querschnitt durch eine Verstärkereinrichtung nach Fig.3 im Bereich der Hebel.

Fig.5 einen vergrößerten Ausschnitt des Hebels.

Fig.6 einen Querschnitt durch eine Verstärkereinrichtung nach Fig.3 im Bereich der Steckverbindung.

Fig.7 eine modifizierte Verstärkereinrichtung im Schnitt

Fig.8 eine weitere Verstärkereinrichtung im Schnitt.

Fig.9 das Kraft-Weg-Diagramm für die in Fig.3, 7 und 8 dargestellten Verstärkereinrichtungen.

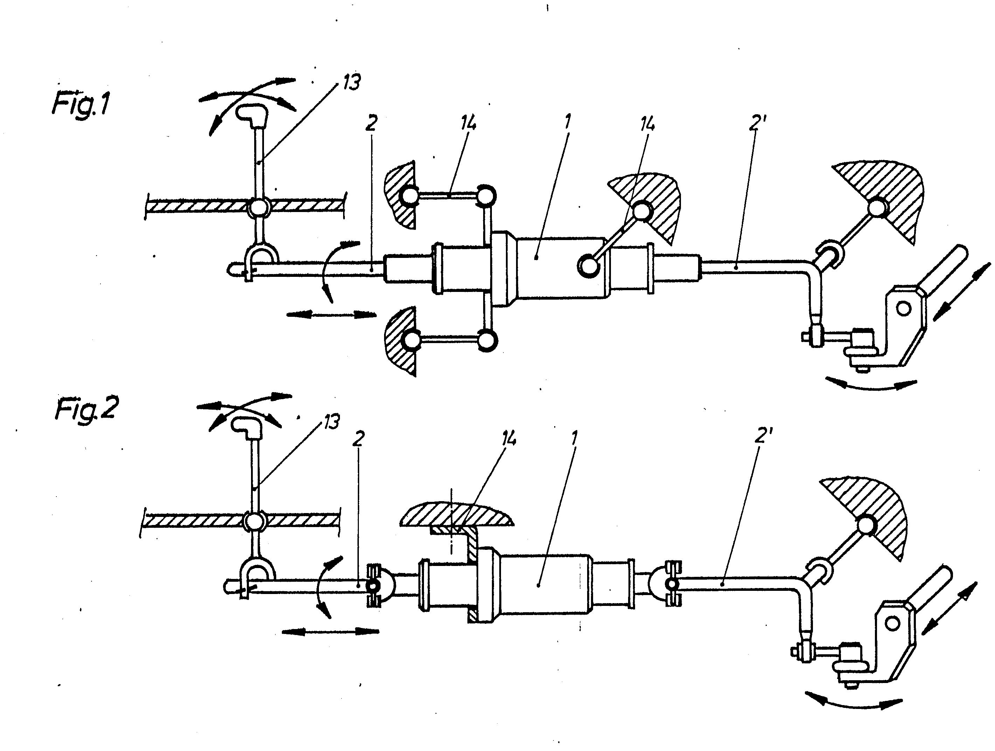

Die in Fig.1 dargestellte mechanische Betätigungseinrichtung besteht im wesentlichen aus dem Betätigungsgestänge 2, 2' und der dazwischen angeordneten axial wirkenden hilfsenergieunterstützten Verstärkereinrichtung 1. Ausgehend vom Schaltstock 13 wird die Betätigungskraft über das Betätigungsgestänge 2 auf die Zwischenwelle 8 der Verstärkereinrichtung 1 übertragen, in der Verstärkereinrichtung 1 entsprechend verstärkt und über das Betätigungsgestänge 2' zum Schaltgetriebe (nicht gezeigt) weitergeleitet. Das zur Schaltgassenwahl erforderliche Drehmoment wird durch die Verstärkereinrichtung hindurchgeleitet, ohne daß eine Verstärkung erfolgt, während die Schaltkraft zum Erzeugen der zur Synchronisierung erforderlichen Anpreßkräfte verstärkt wird. Dabei wird von der Verstärkereinrichtung 1 eine Reaktionskraft auf das eingangsseitige Betätigungsgestänge 2 erzeugt, so daß am Schaltstock 13 dadurch eine der am Getriebe auftretenden Schaltkraft proportionale Betätigungskraft aufzubringen ist. Der Fahrer hat dadurch immer das Gefühl, welche Schaltkraft am Getriebe wirkt, so daß eine feinfühlige, direkte, zeitlich beeinflußbare Betätigung möglich ist. Die für die Auslenkbewegungen beim Schalten nötigen Freiheitsgrade für die Verstärkereinrichtung 1 werden über entsprechende Aufhängepunkte 14 erreicht. Die Verstärkereinrichtung wirkt sowohl in Zug- als auch in Druckrichtung.

In Fig.2 ist die Verstärkereinrichtung am Fahrzeugaufbau befestigt und über Kardangelenke mit dem Betätigungsgestänge verbunden.

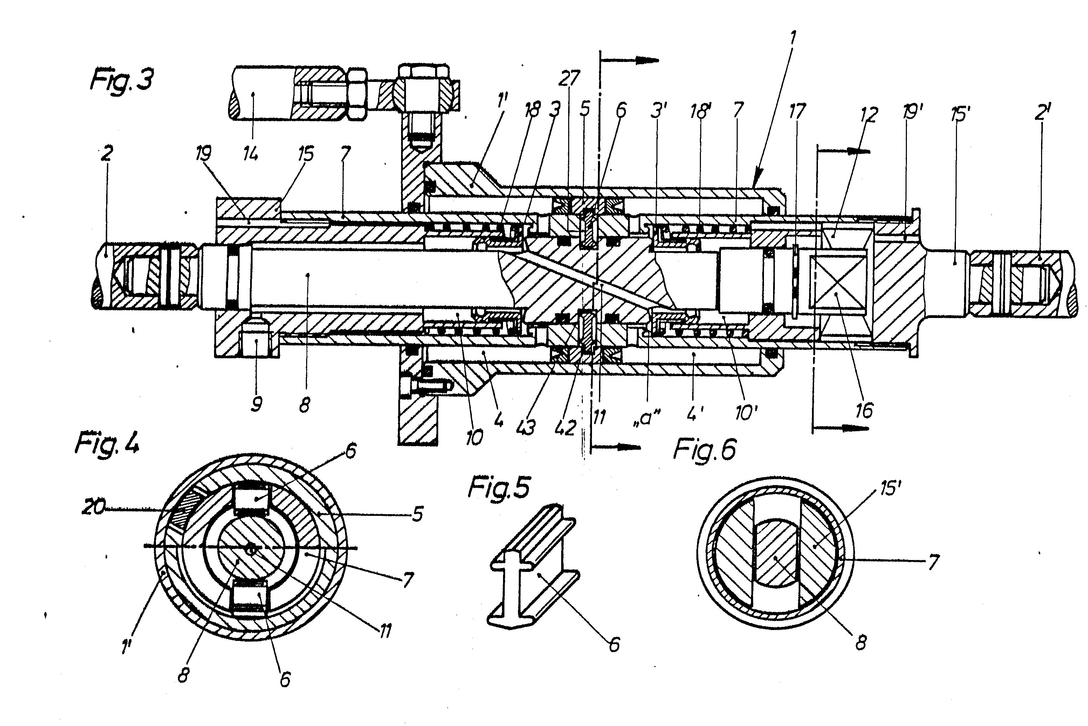

In Fig.3 ist eine Verstärkereinrichtung im Schnitt dargestellt. Im Verstärkergehäuse 1' sind in dessen Bohrung axial verschiebbar angeordnet: eine Zwischenstange 8, eine diese umgebende Hülse 7, zwei Hebelelemente 6, ein mit einer Ringnut 42 versehener, verschiebbarer Ringkolben 5, zwei axial wirkende Doppelsitzfolgeventile 3 und 3' sowie an den Enden der Hülse 7 jeweils ein mit ihr verbundenes Verschluß- bzw. Anschlußstück 15 bzw. 15'. Das Verstärkergehäuse 1' ist mit Aufhängepunkten 14 versehen, die zur Befestigung am Fahrzeugrahmen dienen und ist axial wirkend zwischen das Betätigungsgestänge 2, 2' eingebaut und mit diesem verbunden. Über einen Druckmittelanschluß 9 gelangt das Druckmittel - in diesem Ausführungsbeispiel Druckluft - in einen vom Doppelsitzfolgeventil 3 abgedichteten Druckraum 10, der über eine in der Zwischenstange 8 verlaufende Bohrung 11 mit dem anderen Druckraum 10' in Verbindung steht, welcher von dem Doppelsitzfolgeventil 3' abgedichtet ist. Die zwischen der Hülse 7 und dem Verstärkergehäuse 1' befindlichen Verstärkerkammern 4 und 4' sind noch drucklos, d.h. sie stehen mit der Außenluft in Verbindung. Die Hebelelemente 6 sind als einarmige Hebel ausgebildet und in einer Ringnut 42 des Ringkolbens 5 bzw. Nut 43 der Zwischenstange 8 angeordnet, wobei sie über einen Nocken kippbar mit dem Durchbruch 27 der Hülse 7 in Verbindung stehen. Das zur Schaltgassenwahl erforderliche Drehmoment - das nicht verstärkt wird - wird über die Zwischenstange 8 auf das Anschlußstück 15' weitergeleitet, wozu beide mit einer Steckverbindung 12 versehen sind. Im Bereich dieser Steckverbindung ist die Zwischenstange 8 mit einem Sicherungsring 17 versehen, der die axiale Bewegung der Zwischenstange 8 in der Hülse 7 begrenzt.

Die Funktionsweise der Verstärkereinrichtung ist folgende:

Bei Betätigung des Schaltstockes 13 wird das Betätigungsgestänge 2 beispielsweise nach links gezogen und die Zugkraft auf die Zwischenstange 8 übertragen. Das linke Doppelsitzfolgeventil 3, das an der Dichtfläche der Zwischenstange 8 anliegt, bleibt - beaufschlagt von der Druckfeder 18- an dem Dichtsitz anliegen, so daß der Druckraum 4 abgesperrt und die Verstärkerkammer 4 drucklos bleibt. Das rechte Doppelsitzfolgeventil 3' dagegen verschiebt sich - beaufschlagt von der Druckfeder 18' - mit der Dichtfläche der Zwischenstange 8 um das Spiel "a" nach links, bis es an der Dichtfläche der Hülse 7 anliegt. Wird die Zwischenstange 8 weiter nach links bewegt, so öffnet sich der Axialdichtsitz zwischen 3' und Zwischenstange 8 und die im Druckraum 10' befindliche Druckluft gelangt in die rechte Verstärkerkammer 4'. Die Verbindung zur Außenluft ist dabei abgesperrt, da das Doppelsitzfolgeventil 3' an der Axialdichtfläche der Hülse 7 anliegt. Der sich in der Verstärkerkammer 4' aufbauende Druck wirkt über die Ringfläche auf den Ringkolben 5, der sich nach links verschiebt. Dabei übertragen die Hebelelemente 6 die Verstärkerkraft auf die Hülse 7 die sich ebenfalls nach links verschiebt und diese Bewegung über das Anschlußstück 15' auf das ausgangsseitige Betätigungsgestänge 2' überträgt. Da die Hebelelemente 6 über einen Nocken im Durchbruch 27 der Hülse 7 kippbar gelagert sind, übt er im Verhältnis der Hebelarme auf die Zwischenstange 8 in deren Nut er mit dem anderen Ende liegt, eine nach rechts gerichtete Reaktionskraft aus, die der Verstärkerkraft proportional ist. Der zum Schalten des Getriebes erforderliche Verschiebeweg ist nur abhängig von der Länge der Hülse 7 und somit konstruktiv- und nicht übersetzungsbedingt. Wird der Schaltstock 13 nicht mehr bewegt, weil z.B. der Gang eingelegt bzw. der Verschiebeweg zurückgelegt ist, so kommt das Doppelsitzfolgeventil 3' wieder am Axialdichtsitz der Zwischenstange 8 zur Anlage und sperrt den Druckraum 10' ab. Dadurch wird die Verstärkerkammer 4' nicht mehr mit Druck beaufschlagt und der Restdruck baut sich über die Entlüftungsbohrung 19' ab. Der Schaltvorgang ist damit beendet.

Soll nun ein anderer Gang eingelegt werden, so wird bei erneuter Betätigung des Schaltstockes 13 das Betätigungsgestänge nach rechts gedrückt. Das rechte Doppelsitzfolgeventil 3' bleibt - von der Feder 18' beaufschlagt - an dem Dichtsitz der Zwischenstange anliegen, so daß der rechte Druckraum 10' abgesperrt und die rechte Verstärkerkammer 4' drucklos bleibt. Das linke Doppelsitzfolgeventil 3 dagegen kommt nach Überwindung des Spiels "a" am Axialdichtsitz der Hülse 7 zur Anlage, während es vom Dichtsitz der Zwischenstange 8 abhebt und den Druckraum 10 mit der Verstärkerkammer 4 verbindet. Mit der Anlage am Dichtsitz der Hülse 7 wird gleichzeitig der Durchgang zur Entlüftungsbohrung 19 abgesperrt. Der sich im Verstärkerraum 4 aufbauende Druck wirkt auf den Ringkolben 5 und verschiebt diesen nach rechts, wodurch die Hebelelemente 6 und die Hülse 7 ebenfalls nach rechts verschoben werden. Auf die Zwischenstange 8 wird dabei durch die Hebelelemente 6 eine der Verstärkerkraft proportionale Reaktionskraft nach links ausgeübt. Die Hülse 7 verschiebt sich nun so lange nach rechts, so lange am Schaltstock 13 die Schaltbewegung andauert bzw. eine der Reaktionskraft mindestens entsprechende Betätigungskraft aufgebracht wird. Das Einrücken des Ganges bzw. der zurückgelegte Schaltweg beenden den Schaltvorgang.

Für den Fall, daß die Druckluft ausfällt, ist dennoch ein Schalten des Getriebes möglich, allerdings ohne Kraftverstärkung. Die Betätigungskraft wird dabei über das Anschlußstück 15 auf das Betätigungsgestänge 2' weitergeleitet.

In Fig.4 ist ein Schnitt durch die Verstärkereinrichtung 1 im Bereich der Hebelelemente 6 dargestellt. Wie daraus ersichtlich ist, sind zwei Hebelelemente 6 vorgesehen, die mit ihren Enden jeweils in eine Ringnut 42 des Ringkolbens 5 und in die Nut 43 der Zwischenstange 8 eingreifen. Durch die symmetrisch liegenden Nocken jedes Hebelelementes wird über die Wandung des Durchbruches 27 mit der Hülse 7 die Verbindung zu dieser hergestellt. Um die Hebelelemente 6 montieren zu können, ist der Ringkolben 5 mit einer Ausnehmung versehen, welche mit einem Verschlußstück 20 nach der Montage verschlossen wird.

In Fig.5 ist ein Hebelelement 6 perspektivisch dargestellt. Die Nocken über die sich das Hebelelement 6 am Durchbruch 27 der Hülse 7 bzw. der Nut 43 der Zwischenstange 8 abstützen, bestimmen durch ihren Abstand voneinander das Verhältnis der Reaktionskraft zur Verstärkerkraft, entsprechend den Hebelgesetzen.

Fig.6 zeigt einen Querschnitt durch die Verstärkereinrichtung im Bereich der Steckverbindung 12. Die Zwischenstange 8 ist an ihren Enden mit Abflachungen 16 versehen, die in eine entsprechende Ausnehmung des Anschlußstückes 15' hineinragen und so die Übertragung des Drehmoments zur Schaltgassenwahl ermöglichen.

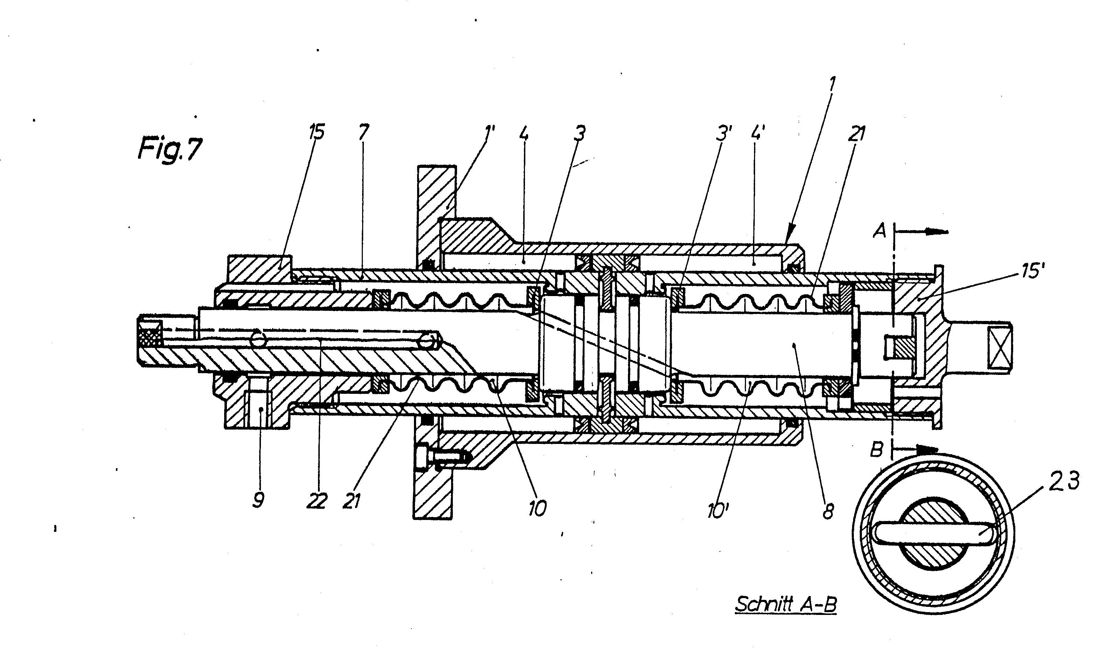

Fig.7 zeigt eine andere Ausführung einer Verstärkereinrichtung. Dabei wird jeder Druckraum 10 und 10' von einem Balgdichtteil 21 gebildet, das axial federnd ausgebildet ist und an seinen Enden die Dichtelemente des Doppelsitzfolgeventils 3 und 3' trägt. Der weitere Aufbau und die Funktionsweise ist ähnlich wie bei der in Fig. 2 gezeigten Ausführung. Von Druckmittelanschluß 9 gelangt die Druckluft über eine in der Zwischenstange 8 befindliche Bohrung 22 in den Druckraum 10 und von dort über die Bohrung 11 in den Druckraum 10'. Die Druckräume sind zunächst von den Doppelsitzfolgeventilen 3 und 3' abgeschlossen. Bei Betätigung des Schalthebels wird die Zwischenstange 8 verschoben, z.B. nach links, und das Doppelsitzfolgeventil 3' öffnet, nachdem es am Dichtsitz der Hülse 7 anliegt, die Verbindung des Druckraumes 10' zur Verstärkerkammer 4'. In der schon beschriebenen Weise wirkt der Druck auf den Ringkolben 5 und über die Hebelelemente 6 auf die Hülse 7, wobei eine nach rechts gerichtete Reaktionskraft auf die Zwischenstange 8 ausgeübt wird.

Die bei dieser Ausführung verwendeten Balgdichtteile 21 sind aus dünnwandigem Blech hergestellt, weshalb sich bei axialer Belastung eine Federwirkung ergibt, die als Vorspannung für die Doppelsitzfolgeventile 3, 3' ausgenutzt wird. Dadurch wird die Anzahl der Teile erheblich reduziert. Das zur Schaltgassenwahl erforderliche Drehmoment wird durch eine Paßfeder 23 übertragen.

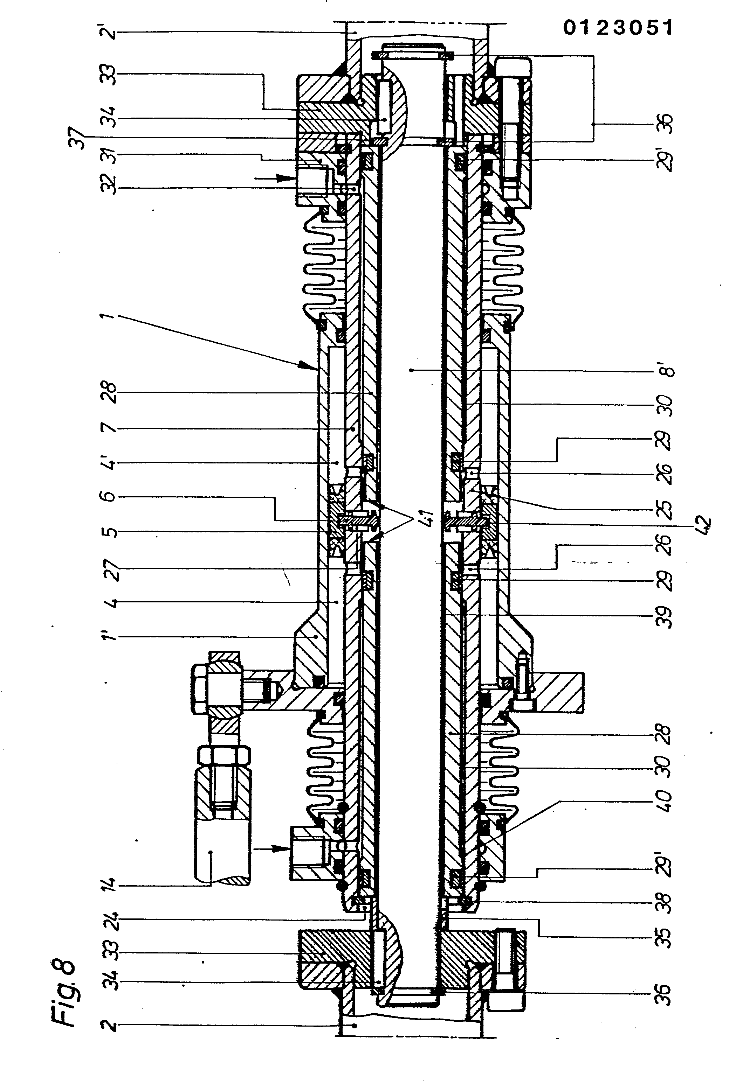

Fig.8 zeigt eine weitere Variante der Verstärkereinrichtung 1 im Schnitt, deren bewegliche Lagerung des Verstärkergehäuses 1' über die Aufhängepunkte 14 erfolgt und aus Fig. 1 ersichtlich ist. Im Verstärkergehäuse 1' ist die Hülse 7 dichtend gelagert, welche mittels des zu ihr relativ verschiebbaren Ringkolbens 5 die beiden Verstärkerkammern 4, 4' in bekannter Anordnung abteilt. Die Hülse 7 weist beidseitig eine nach innen verlaufende Stufenbohrung 24 auf, welche ein symmetrisch liegendes, im Durchmesser kleineres Ringteil 25 beläßt. Dieses Ringteil 25 ist Sitz der Steuerbohrung 26 und der Lagerdurchbrüche 27 für die Hebelelemente 6. In den Stufenbohrungen 24 und dem Ringteil 25 sind beidseitig je ein Stufenkolben 28 mit den Dichtungen 29, 29' verschiebbar gelagert, welche in der gezeigten Grundstellung die Druckräume 30 einschließen und über die auf der Hülse 7 gesicherten Anschlußstücke 31 und den Zuführbohrungen 32 in der Hülse 7 mit dem Verstärkermedium verbunden sind.

Die Schwenk-, Zug- oder Druckbetätigung der Verstärkereinrichtung 1 wird mittels der zentralliegenden, durch die Innenbohrung der Stufenkolben 28 geführten Zwischenstange 8' ausgeführt. Dazu ist das Betätigungsgestänge 2, 2' mit den Flanschen 33 verschraubt, die beiderseits an den Enden der Zwischenstange 8' durch eine Paßfederverbindung 34 für die Gassenwahl schwenkbar und mittels der Stellhülse 35 und der Wellensicherungsringe 36 axial verschiebbar, die Steuerwege der Stufenkolben 28 festlegen und begrenzen.
Die Grundstellung der Verstärkereinrichtung ist durch die Anlage der beiden Stufenkolben 28 am Bund 37 des Flansches 33 sowie am Bohrungssicherungsring 38 der Hülse 7 gegeben. Über den konstruktiv belassenen Lüftspalt 39 zwischen der Bohrungswandung des Stufenkolbens 28 und der Zwischenstange 8' sind beide Verstärkerkammern 4, 4' mit den Bohrungen 26 in Grundstellung zur Atmosphäre verbunden. Wird nun über das Betätigungsgestänge 2 eine Axialbewegung ausgeführt, so wird der entsprechende Stufenkolben 28 entgegen der auf ihn wirkenden Rückstellkraft, hervorgerufen aus dem Produkt der Differenzfläche 40 am Stufenkolben 28 multipliziert mit dem Mediumdruck, solange bewegt, bis die Axialdichtung die Steuerbohrung 26 überfahren hat und die Verstärkerkammer 30 mit dem Druckraum 4, 4' verbindet. Gleichzeitig gelangt die Stirnfläche 41 des Stufenkolbens 28 an den Hebelelementen 6 zur Anlage, der verstärkte Hub beginnt und dauert solange, wie der Stufenkolben 28 gegen die Hebelelemente 6 gedrückt wird und das Druckmedium Verbindung zur Verstärkerkammer 4, 4' besitzt. Wird die Eingangskraft von der Zwischenstange 8' genommen und entlastet, so werden Hebelelemente 6 und Stirnfläche 41 des Stufenkolbens 28 getrennt, die Verstärkung entfällt und der Stufenkolben 28 wird von der ständig anstehenden Rückstellkraft in seine Grundstellung gedrückt. Dabei überfährt die Radialdichtung 29 die Steuerbohrung 26 und die Verstärkerkammer 4 bzw. 4' wird vorbei am Stufenkolben 28 über den Lüftspalt 39 mit der Atmosphäre verbunden.

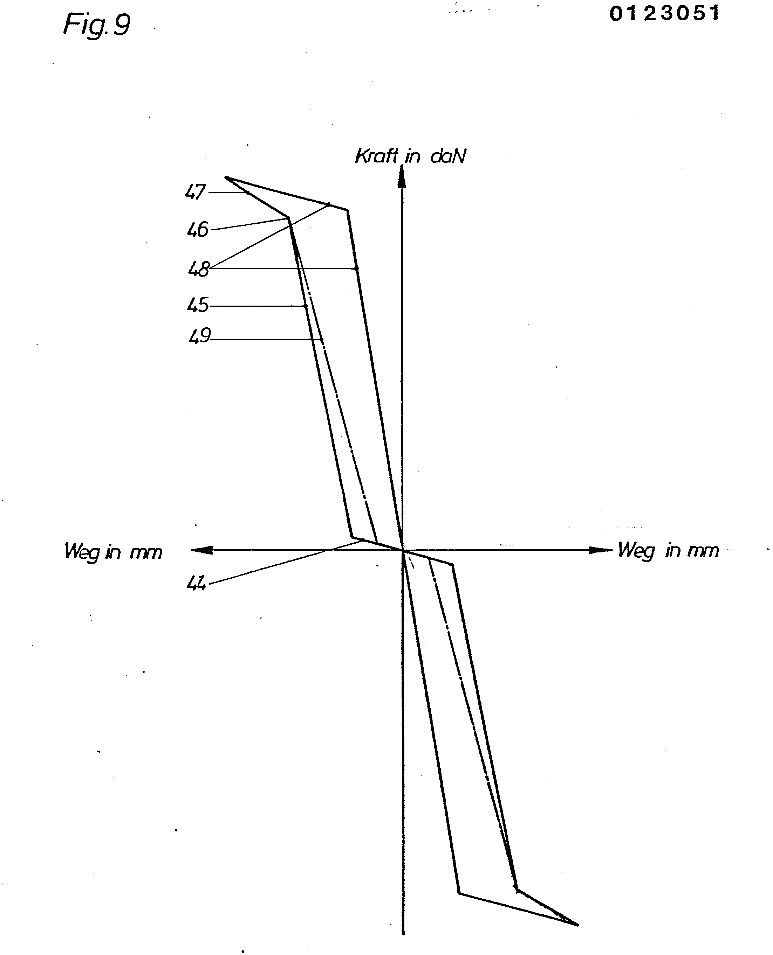

Fig.9 zeigt das Kraft-Weg-Diagramm in Zug- und Druckrichtung für die in Fig.3, 7 und 8 dargestellten Verstärkereinrichtungen. Das Teilstück 44 der Kennlinie

0123051

kennzeichnet die nötige Betätigungs- oder Ansteuerkraft, das Teilstück 45 bis zum Aussteuerpunkt 46 der Kennlinie die Verstärkung, während das Teilstück 47 der Kennlinie nach Erreichen des Maximum nur noch mechanisch über den Schaltstock vom Bediener erzeugt wird. Die beiden Teilstücke 48 der Kennlinie beschreiben den Rücklauf in die Grundstellung. Der erläuterte Kurvenverlauf gilt für die Verstärkereinrichtung wie in Fig. 3 und 7 gezeigt, während der strichpunktierte Verlauf 49 die Funktion der Fig. 8 darstellt. Die hierbei verkleinerte Ansteuerkraft resultiert einerseits durch die Halbierung der Anzahl der außenliegenden Radialdichtungen 29, 29' am Stufenkolben 28, wodurch das Überdrücken bei Betätigung der beiden Ventilfedern 18 und 21 der Verstärkereinrichtung 1 wie in Fig. 3 und 7 entfällt und andererseits durch das Teilen der Ventilfunktion nur die Hälfte der beweglichen Dichtungen betätigt wird. Vorteilhaft ergibt sich neben einer vereinfachten Ausführung, daß die geringere Steigung der Kennlinie die Verstärkung über einen größeren Schaltweg zuläßt und somit eine gefühlvollere Bedienung am Schaltstock 13 ermöglicht.

Abschließend ist noch zu bemerken, daß die Erfindung z.B. auch zur Betätigung von Gabelstaplern, Baggern oder Kranen dienen kann, also nicht auf Gangschaltungen beschränkt ist.

FAG Kugelfischer Georg Schäfer KGaA
8720 Schweinfurt

R-RS-739
15. Februar 1984

0123051

-1-

## Schutzansprüche

1. Mechanisch betätigte mit Hilfsenergie betriebene Verstärkereinrichtung vorzugsweise zum Gangschalten von LKW-Synchrongetrieben, die axial wirkend zwischen dem Betätigungsgestänge angeordnet ist, dadurch gekennzeichnet, daß die mit Hilfsenergie betriebene Verstärkereinrichtung ( 1 ) sowohl in Zug- als auch in Druckrichtung die über das Betätigungsgestänge (2) eingeleitete Kraft verstärkt und eine der Verstärkungskraft proportionale Reaktionskraft auf das Betätigungsgestänge (2) ausübt.

2. Mechanisch betätigte mit Hilfsenergie betriebene Verstärkereinrichtung nach Anspruch 1, dadurch gekennzeichnet, daß die Mittel zur Erzeugung der Reaktionskraft vorzugsweise metallische Hebelelemente (6) sind.

3. Mechanisch betätigte mit Hilfsenergie betriebene Verstärkereinrichtung nach Anspruch 1, dadurch gekennzeichnet, daß in einer Hülse (7) des Verstärkergehäuses (1') zwei spiegelbildlich zueinander axial wirkende Doppelsitzventile (3, 3') vorgesehen sind, die je nach Bewegungsrichtung die eine oder die andere Verstärkerkammer (4, 4') mit Druckmittel beaufschlagen, das auf einen Ringkolben (5) einwirkt, welcher mit mindestens einem beweglichen Hebelelement (6) in losem Form- und Kraftschluß über die Hülse (7) als Widerlager in Wirkverbindung mit einer Zwischenstange (8) steht, wobei die Zwischenstange (8) mit dem eingangsseitigen Betätigungsgestänge (2) verbunden ist und eine über die Hebelelemente (6) bewirkte Reaktionskraft erfährt.

4. Mechanisch betätigte mit Hilfsenergie betriebene Verstärkereinrichtung nach Anspruch 3, dadurch gekennzeichnet, daß der Ringkolben (5) auf der Hülse (7) axial verschiebbar angeordnet ist.

5. Mechanisch betätigte mit Hilfsenergie betriebene Verstärkereinrichtung nach Anspruch 2 und 3, dadurch gekennzeichnet, daß der Ringkolben (5) am Innendurchmesser und die Zwischenstange (8) am Außendurchmesser je eine Ringnut (42,43) zur Aufnahme der Hebelelemente (6) aufweisen.

6. Mechanisch betätigte mit Hilfsenergie betriebene Verstärkereinrichtung nach Anspruch 1, dadurch gekennzeichnet, daß in den Stufenbohrungen (24) der Hülse (7) des Verstärkergehäuses (1') zwei spiegelbildlich zueinander angeordnete, radial dichtende Stufenkolben (28) gelagert sind, die mit der Wandung der Stufenbohrung (24) die Druckkammern (30) einschließen, von welchen ausgehend, je nach Bewegungsrichtung, beim Überfahren der Steuerbohrungen (26), durch die Radialdichtungen (29), die eine oder die andere Verstärkerkammer (4, 4') mit Druckmittel beaufschlagt wird, das auf einen Ringkolben (5) einwirkt, der relativ zur Hülse (7) dichtend und verschiebbar gelagert ist, welcher mit mindestens einem Hebelelement (6) in Form- und Kraftschluß über die Hülse (7) als Widerlager in Wirkverbindung mit der Stirnfläche (41) des jeweiligen Stufenkolben (28) steht und die Verstärkerkraft auf die mit dem ausgangsseitigen Betätigungsgestänge (2') verflanschte Hülse (7) überträgt, wobei die Steuerbewegung am jeweiligen Stufenkolben (28) und die an seiner Stirnfläche (41) anstehende Reaktionskraft der anliegenden Hebelelemente (6) über eine zentral durch beide Stufenkolben (28) geführte, mit dem eingangsseitigen Betätigungsgestänge (2) schwenkbar verflanschte Zwischenstange (8') mittels der Stellhülse (35) oder den Wellensicherungsringen (36) auf Druck oder Zug am Schaltstock (13) ausgeführt und gehalten wird.

7. Mechanisch betätigte mit Hilfsenergie betriebene Verstärkereinrichtung nach Anspruch 6, dadurch gekennzeichnet, daß bei der Steuerbewegung mittels der Zwischenstange (8') jeweils einer der Stufenkolben (28) bewegt wird und dessen Rückstellung in die Ausgangslage mittels des auf die Differenzfläche (40) der Stufenkolben (28) ständig wirkenden Mediumdruckes erfolgt.

8. Mechanisch betätigte mit Hilfsenergie betriebene Verstärkereinrichtung nach Anspruch 3, dadurch gekennzeichnet, daß die Hülse (7) mit am Umfang liegenden Durchbrüchen (27) versehen ist, die als Widerlager für die Hebelelemente (6) dienen.

Fig.1

Fig.2

Fig. 3

Fig. 4

Fig. 5

Fig. 6

0123051

Fig.7

Schnitt A-B

0123051

Fig. 8

Fig. 9

0123051

47

46

48

45

49

Kraft in daN

Weg in mm

Weg in mm

44

0123051